# EUROPÄISCHE PATENTSCHRIFT

(11) **EP 1 216 547 B1**
(45) Veröffentlichungstag und Bekanntmachung des Hinweises auf die Patenterteilung: **23.03.2005**
(21) Anmeldenummer: 00975782.4
(22) Anmeldetag: 21.09.2000
(51) Int. Cl.: H04L 12/28, H04M 11/00, H04L 29/06

(54) **VERFAHREN ZUR UMSETZUNG EINER SPRACHGEBUNDENEN AUSGABE VON ZUSTANDSMELDUNGEN**
METHOD FOR CONVERTING STATUS MESSAGES OUTPUT IN SPOKEN FORM
PROCEDE POUR CONVERTIR DES MESSAGES D'ETAT EMIS SOUS FORME VOCALE

(30) Priorität: 30.09.1999 DE 19947100
(43) Veröffentlichungstag der Anmeldung: 26.06.2002
(73) Patentinhaber: SIEMENS AKTIENGESELLSCHAFT, 80333 München (DE)
(72) Erfinder: KAMPERSCHROER, Erich, 46499 Hamminkeln (DE)
(86) Internationale Anmeldenummer: PCT/DE2000/003297
(87) Internationale Veröffentlichungsnummer: WO 2001/024450

(56) Entgegenhaltungen:
- WO-A-97/25808
- GB-A- 2 295 067
- "XPRESS Reference Manual for the HCS II - Release 3.62" [Online] 3. Oktober 1998 (1998-10-03) , CREATIVE CONTROL CONCEPTS XP002162174 Gefunden im Internet: <URL: www.cc-concepts.com> [gefunden am 2001-03-06] Absatz 1. Absatz 3.3 - 3.3.1 Appendix A: Example 5

## Beschreibung

Die Erfindung betrifft ein Verfahren zur Umsetzung einer sprachgebundenen Ausgabe von Zustandsmeldungen.

Eine Anordnung zum Ineinanderübersetzen von Protokolldateneinheiten inkompatibler Netze ist eine mit unter Umständen erheblicher Intelligenz ausgestattete Schnittstelle, die in der Fachsprache mit dem Begriff 'Gateway' bezeichnet wird. Diese Schnittstelle führt nach dem OSI-Referenzmodell (vgl. Unterrichtsblätter, Jg. 48, 2/1995, Seiten 102 bis 111 und N. Klußmann: Lexikon der Kommunikations- und Informationstechnik, 1997, Hüthig-Verlag, Seiten 360 bis 362) Funktionen der Schichten 3 oder höher (bis Schicht 7) aus.

Unter dem Begriff Netz werden sämtliche Ressourcen, die voneinander entfernte Dienstzugangspunkte verbinden und diesen Dienste zu Kommunikationszwecken zur Verfügung stellen, verstanden. Dieses trifft sowohl auf in ihrer Ausdehnung sehr begrenzte Netze, z. B. lokale Netze, als auch auf in ihrer Ausdehnung sehr große Netze, z. B. Telekommunikationsnetze, zu.

Netze, die bezüglich ihrer Protokolldateneinheiten inkompatibel sind, sind insbesondere Telekommunikationsnetze - z. B. das öffentliche Fernsprechnetz (PSTN), das diensteintegrierende digitale Netz (ISDN), das auf der asynchronen digitalen Teilnehmerleitung (ADSL) basierende Festnetz, das Mobilfunknetz nach dem GSM-Standard (erste und zweite Mobilfunkgeneration), das Mobilfunknetz nach dem UMTS-Standard (dritte Mobilfunkgeneration), das mobile Netz nach dem DECT- und/oder PHS-Standard, das globale Computernetz (Internet), das Stromversorgungsnetz und das Breitbandkabelnetz - und jegliche Art von lokalen Netzen - z. B. das Heim-Automation-System, bestehend aus einem Netzwerk mit einer Funk-, einer PLC-, einer IRDA-, einer InstaBus-, einer HES-Bus-, einer 'Twisted Pair'- oder einer Koaxialkabel-Übertragungsstrecke.

Das Heim-Automation-System beschreibt gemäß der Druckschriften ?*Funkschau 3*/*1989, Seiten 45 und 46; Elektronik 18*/*1995, Seiten 50 bis 58; Elektronik 17*/*1996, Seiten 42 bis 47 und Seiten 48 bis 53; Elektronik 4*/*1997, Seiten 64 bis 72; Elektronik 1*/*1998, Seiten 30 bis 33; Elektronik 17*/*1998, Seiten 74 bis 77, Seiten 78 bis 81 und Seiten 82 bis 84*? das 'technische Management' von Häusern und Wohnungen. Hierunter wird alles das verstanden, was dem Komfort der Bewohner dient. Dazu zählen beispielsweise das Last- und Energiemanagement, die Warmwasserbereitung, die Beleuchtung, die Lüftungs- und Heizungsanlagen, die Bedienung von motorgetriebenen Elementen (z. B. Jalousien, Garagentore, Rolläden etc.) sowie die Sicherheits- und Schutzeinrichtungen (z. B. Rauch-/Feuermelder, Einbruch-Warnanlagen, Zugangsüberwachungsanlagen, Bewegungsmelder etc.).

Darüber hinaus erfaßt das 'technische Management' auch die Steuerung beliebiger weiterer elektrischer Geräte - vom Stellen einer Uhr bis zum Einschalten einer Kaffeemaschine. Bei der Installation von Heim-Automation-Systemen (Haus-Bussystemen) müssen für eine erfolgreiche Markteinführung im wesentlichen folgende Voraussetzungen erfüllt sein:
1. Verzicht auf zusätzliche Verkabelung
2. Geringer Kostenaufwand
3. Einheitliche Kommunikationsnorm
4. Interoperabilität
5. Plug-and-Play-Fähigkeit

In der jüngeren Vergangenheit haben sich im Bereich der Heim-Automation-Systeme, basierend auf unterschiedliche Ansätze (konsumgutorientierter Ansatz, installationsartikelorientierter Ansatz, computerhardwareorientierter Ansatz) diverse Standards für Heim-Bussysteme herauskristallisiert, die jedoch mehr oder weniger singuläre Lösungen für die Heim-Automation darstellen. Zu diesen Standards zählen:
1. Bei dem konsumgutorientierten Ansatz der Consumer Electronics Bus (CEBus), das ESPRIT Home System (EHS) und das Home Bus System (HBS),
2. bei dem installationsartikelorientierten Ansatz der Bati-Bus, der European Installation Bus (EIB) und das Smart House und
3. bei dem computerhardwareorientierten Ansatz das Local Operating Network (LON) und der The Real Time Operating System Nucleus (TRON).

Die Frage, welche der genannten Standards sich letztlich durchsetzen und somit zum De-facto-Standard wird, hängt im wesentlichen davon ab, wie attraktiv der jeweilige Standard für die Heim-Automation ist. Attraktiv und wirklich nützlich ist ein solches System jedoch nur dann, wenn es eine ausreichende Menge an Produkten gibt, die über dieses Netz kommunizieren. Nur wenn der Haus- bzw. Wohnbesitzer beim Kauf einer Waschmaschine, eines Elektroherdes etc. weiß, daß das jeweilige Gerät mit seinem Heim-Bussystem kommuniziert, wird er vielleicht die Zusatzkosten eines Heim-Automation-Systems zahlen und ein solches System in seinem Haus installieren. Wenn der Hersteller dieser Geräte aber nicht weiß, welches Bussystem letztlich das "Rennen" macht, wird dieser nicht ohne weiteres in eine teuere Schnittstelle für das jeweilige Bussystem investieren, um dann festzustellen, daß sich die Geräte durch diese Investition gar nicht besser verkaufen lassen.

Um die Attraktivität der vorstehend beschriebenen Heim-Automation-Systeme zu verbessern, ist somit eine 'Intelligente Heim-Schnittstelle' (Residential Gateway) erforderlich, die einerseits kostengünstig ist und die andererseits dem Hersteller von Geräten, die im Rahmen der Heim-Automation fernsteuerbar sind, vielfältige Variationsmöglichkeiten bezüglich der Realisierung der Schnittstellen für das bei der Heim-Automation verwendete Bussystem bietet.

Ein Anstatz für die Realisierung einer 'Intelligente Heim-Schnittstelle' (Residential Gateway) wie sie aus einer deutschen Patentanmeldung mit dem Titel "Anordnung zum Ineinanderübersetzen von Protokolldateneinheiten inkompatibler Netze" - amtliches Anmeldeaktenzeichen 19904544.5 - bekannt ist, besteht darin, daß Ineinanderübersetzen von Protokolldateneinheiten inkompatibler Netze, einem Telekommunikationsnetz - z. B. das öffentliche Fernsprechnetz (PSTN), das diensteintegrierende digitale Netz (ISDN), das auf der asynchronen digitalen Teilnehmerleitung (ADSL) basierende Festnetz, das Mobilfunknetz nach dem GSM-Standard (erste und zweite Mobilfunkgeneration), das Mobilfunknetz nach dem UMTS-Standard (dritte Mobilfunkgeneration), das mobile Netz nach dem DECTund/oder PHS-Standard, das globale Computernetz (Internet), das Stromversorgungsnetz und das Breitbandkabelnetz - und einem - z.B. als Heim-Automation-System, bestehend aus einem Netzwerk mit einer Funk-, einer PLC-, einer IRDA-, einer InstaBus-, einer HES-Bus-, einer 'Twisted Pair'- oder einer Koaxialkabel-Übertragungsstrecke ausgebildeten - lokalen Netz, mittels eines mit dem Telekommunikationsnetz verbundenen Telekommunikationsendgerätes, das eine Fernbedienungsstruktur aufweist und dem eine x-beliebige Schnittstelle zur Verbindung mit dem lokalen Netz über einen speziellen Netzadapter zugeordnet ist, zu realisieren.

Das Telekommunikationsendgerät wird dabei infolge der zunehmenden Konvergenz von Kommunikations- und Informationsgeräten um die Funktion 'intelligente Schnittstelle' (Funktion 'gateway') erweitert. Die zur Fernsteuerung von Geräten in dem lokalen Netzwerk zu übertragenen Informationen (z. B. Steuerbefehle, Statusinformationen, Alarmmeldungen etc.) werden von der Schnittstelle in einem speziellen Satzformat mit einem die Geräteidentifikation bzw. die Geräteadresse angebenden ersten Satzformatteil, einem den Steuerungsbefehl für das Gerät enthaltenen zweiten Satzformatteil und einem die Steuerungsnutzinformation enthaltenen dritten Satzformatteil übertragen.

Mit einem derart ausgestalteten Telekommunikationsendgerät lassen sich beliebige mit dem Telekommunikationsendgerät verbundene Geräte ansteuern.

Dazu muß ein Bediener von einer entfernten Bedieneinheit beispielsweise lediglich durch Übertragen der Geräteidentifikation und des Steuerungsbefehles eine Aktion in dem durch die Geräteidentifikation festgelegten Gerät auslösen, das Gerät in einen anderen Betriebszustand versetzen oder den aktuellen Betriebszustand abfragen.

Es ist bekannt, daß die Ausgabe des Betriebszustandes als Datenwort an die entfernte Bedieneinheit übertragen wird und dort im allgemeinen als alphanumerische Ausgabe auf einem Display der entfernten Bedieneinheit erfolgt.

Es sind weiterhin Geräte bekannt, die Datenworte, die im allgemeinen numerische Werte enthalten, durch eine Einrichtung zur Sprachsynthese in ihre sprachliche Entsprechung wandeln und ausgeben. Beispielsweise wird der Wert "0" als gesprochen "Null" ausgegeben.

Der Benutzer solcher Geräte muß dann im allgemeinen mittels einer Liste oder einem Handbuch die Bedeutung dieses Wertes, also insbesondere einen diesem Wert zugeordneten Gerätezustand ermitteln.

Diese Art der Ausgabe des Gerätezustandes ist sehr umständlich für einen Bediener und erfordert stets die Anwesenheit dieser Liste bzw. des Handbuches, um eine Fernsteuerung des Gerätes durchzuführen.

Aus "XPRESS Reference Manual for the HCS II - Release 3.62" 3. Oktober 1998, CREATIVE CONTROL CONCEPTS XP002162174ist ein "Home Automation System"-Gerät bekannt, welches als modular erweiterbarer Einplatinenrechner ausgestaltet ist. Das Gerät ermöglicht die Steuerung von Hausgeräten über an den Einplatinenrechner angeschlossene Netzwerkmodule, wobei durch ein Sprachmodul und einem Telefonschnittstellenmodul auf eingegebene DTMF Töne hin Sprachausgaben über eine Telefonleitung möglich werden.

Die der Erfindung zugrundeliegende Aufgabe besteht darin, ein Verfahren zur Umsetzung einer sprachgebundenen Ausgabe von Zustandsmeldungen, insbesondere in Heim-Automation-Systemen, anzugeben, das kostengünstig und einfach zu realisieren sowie für jeweils unterschiedliche Netztypen (z.B. die vorstehend genannten Typen von Netzen) universell einsetzbar ist.

Diese Aufgabe wird durch die Merkmale des Patentanspruchs 1 gelöst.

Beim erfindungsgemäßen Verfahren - gemäß Anspruch 1 - wird für jedes Gerät, daß mit einer Telekommunikationsendeinrichtung verbunden und damit in einem lokalen Netz aufgenommen wird, eine eindeutige Geräteidentifikation zugeordnet, mit der die Telekommunikationsendeinrichtung das jeweilige Gerät insbesondere im Zuge einer Fernsteuerung ansprechen kann und durch die sich jedes Gerät identifiziert. Zu jeder Geräteidentifikation und damit zu jedem Gerät werden drei Sprachphrasen zugeordnet und in dieser Zuordnung gespeichert. Zustände, die ein in dem lokalen Netzwerk enthaltenes Gerät annehmen kann, entnimmt die Telekommunikationsendeinrichtung aus dem Wert eines Datenwortes, das der Telekommunikationsendeinrichtung von dem Gerät übermittelt wird. Entspricht der Wert dieses Datenwortes einem ersten Wert, so wird als Ausgabephrase die erste dem Gerät zugeordnete Sprachphrase ausgewählt. Entspricht der Wert des Datenwortes einem zweiten Wert, so wird als Ausgabephrase die zweite dem Gerät zugeord nete Sprachphrase ausgewählt. Entspricht der Wert des Datenwortes weder dem ersten noch dem zweiten Wert, dann entspricht der Wert des Datenwortes mindestens einem dritten Wert und als Ausgabephrase wird die dritte dem Gerät zugeordnete Sprachphrase in Verbindung mit dem dritten Wert ausgewählt. Ist die Ausgabephrase ausgewählt, wird sie in eine für eine Einrichtung zur Sprachsynthese lesbare Form gewandelt und an diese Einrichtung zur Sprachsynthese zur Ausgabe übermittelt.

Durch das erfindungsgemäße Verfahren wird eine höhere Akzeptanz bei Benutzern eines auf diese Weise realisierten Systems zur Fernsteuerung von Geräten erreicht, insbesondere Heim-Automation-Systems, da durch die Verwendung von Sprachphrasen für die Ausgabe von Gerätezuständen die für den Benutzer ohne Zusatzinformation eher kryptischen Werte des Datenwortes besser verstanden werden. Zudem entfällt dadurch auch überwiegend ein Nachschlagen von den den Werten des Datenwortes zugeordneten Gerätezuständen, so daß die Fernsteuerung, insbesondere die Fernabfrage des Gerätezustandes ohne großen Aufwand durch den Benutzer angeregt werden kann. Daneben bewirkt ein Begrenzen der zu einem Gerät zugeordneten Sprachphrasen auf insbesondere drei Sprachphrasen sowie die Einfachheit des Verfahrens, daß der benötigte Speicherplatz minimal ist. Die Zuordnung von Sprachphrasen zu Gerätezuständen läßt sich außerdem universell für jedes beliebige Gerät anwenden.

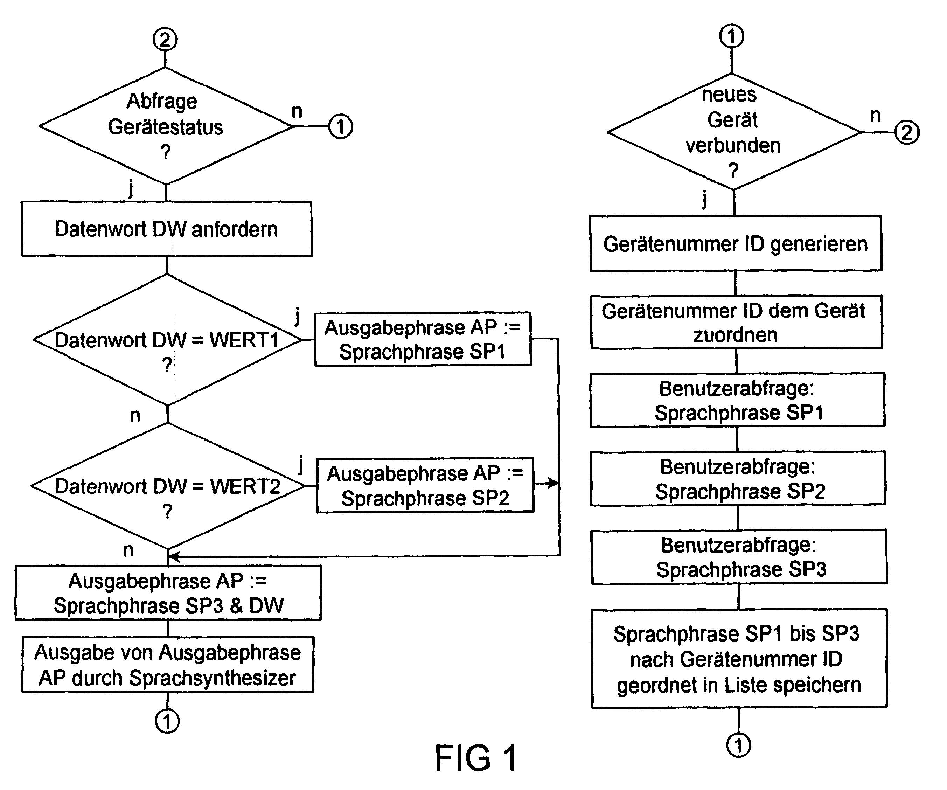

Ein Ausführungsbeispiel der Erfindung wird anhand der einzigen FIGUR erläutert. Diese zeigt:
Ein Ablaufdiagramm eines Verfahrens zur Umsetzung einer sprachgebundenen Ausgabe von Gerätezuständen.

In der FIGUR wird anhand eines Ablaufdiagramms das Verfahren zur Umsetzung einer sprachgebundenen Ausgabe von Gerätezuständen beschrieben.

Zu Beginn 1 des Verfahrens, daß in einem Telekommunikationsendgerät - insbesondere im Hintergrund - abläuft, so daß die in Telekommunikationsendeinrichtungen üblichen Verfahren weitestgehend ungestört ablaufen, wird zunächst geprüft, ob ein neues Gerät mit der Telekommunikationsendeinrichtung verbunden wurde.

Ist ein neues Gerät verbunden worden, wird für das Gerät eine Gerätenummer ID generiert, die dem Gerät zur Geräteidentifikation eindeutig zugeordnet wird.

Das Generieren der Gerätenummer ID erfolgt derart, daß den Geräten eine fortlaufende Nummer zugeordnet wird. D.h. die jeweils zuletzt vergebene Gerätenummer ID wird inkrementiert und dem jeweils neu verbundenen Gerät zugeordnet.

Alternativ dazu kann als Geräteidentifikation eine Gerätenummer ID dem Gerät zugeordnet werden, die durch das Gerät vorgegeben wird und nach dem Verbinden mit der Telekommunikationsendeinrichtung, dieser Telekommunikationsendeinrichtung im Zuge eines Initialisierungsvorgangs übermittelt wird.

Denkbar ist auch eine Kombination aus alphabetischen und numerischen Zeichen zur Generierung einer Geräteidentifikation ID.

Nach dem Zuordnen der Gerätenummer ID wird der Benutzer aufgefordert über eine Einrichtung des Telekommunikationsendgerätes, insbesondere Mikrofon, eine erste Sprachphrase SP1 einzugeben, die einem durch einen ersten Wert WERT1 gekennzeichneten Gerätezustand zugeordnet wird, eine zweite Sprachphrase SP2 anzugeben, die einem zweiten durch einen zweiten Wert WERT2 gekennzeichneten Gerätezustand zugeordnet wird und eine dritte Sprachphrase SP3 anzugeben, die einem beliebigen weiteren durch einen sich von dem ersten und zweiten Wert WERT1, WERT2 unterscheidenden Wert WERT3 gekennzeichneten Gerätezustand zugeordnet wird.

Ist beispielsweise eine fernsteuerbare Rollade mit der Telekommunikationsendeinrichtung verbunden, dessen die Zustände kennzeichnenden Werte in einem Intervall [0; 255] definiert sind, wobei der Wert "0" dem Zustand "Rollade ganz hochgefahren", der Wert "255" dem Zustand "Rollade ganz heruntergefahren" entspricht und die restlichen Werte einen Zustand zwischen diesen beiden Zuständen kennzeichnen, so kann der Benutzer als erste Sprachphrase SP1 die Formulierung " Rollade ganz hochgefahren." angeben und dem Wert "0" zuordnen, als zweite Sprachphrase SP2 kann der Benutzer die Formulierung " Rollade ganz heruntergefahren." angeben und dem Wert "255" zuordnen. Allen anderen Werten die im Intervall [1; 254] liegen, kann der Benutzer die Formulierung "Die aktuelle Stellung der Rollade entspricht dem Wert: " angeben und zuordnen.

Im Anschluß an die Benutzerabfrage, werden die drei Sprachphrasen SP1 bis SP3 in Verbindung mit der Gerätenummer ID in Form einer geordneten Liste derart gespeichert, daß mittels einer aktuellen Gerätenummer ID und einem aktuellen einen Gerätezustand kennzeichnenden Wert WERT1, WERT2 oder WERT3 genau eine zugehörige Sprachphrase SP1, SP2 oder SP3 ermittelt werden kann.

Alternativ kann vorgesehen sein, daß die Sprachphrasen SP1, SP2 und SP3 jeweils pro Gerät bereits in digitalisierter und zur Speicherung und Sprachsynthese entsprechend aufbereiteter Form auf einem Speichermedium, beispielsweise Diskette oder ein Speicherchip auf dem Gerät, zur Verfügung gestellt wird, so daß sie nicht vom Benutzer eingegeben werden müssen.

Nach erfolgter Speicherung startet das Verfahren erneut mit der Prüfung, ob ein neues Gerät verbunden wurde Startpunkt 1.

Ergibt die Prüfung, daß kein neues Gerät verbunden wurde, so wird in einem zweiten Schritt 2 geprüft, ob ein Gerätezustand eines beliebigen sich in dem lokalen Netz befindenden und mit der Telekommunikationsendeinrichtung verbunden Gerätes von einem Benutzer abgefragt wird.

Tritt dieser Fall auf, wird von dem Gerät ein Datenwort DW angefordert, das den Wert WERT1, WERT2 oder WERT3 des aktuellen Zustandes des Gerätes beinhaltet. Nach Erhalt des Datenwortes DW wird überprüft, welchen Wert WERT1, WERT2 oder WERT3 das Datenwort DW beinhaltet.

Beinhaltet das Datenwort DW den ersten Wert WERT1, so wird aufgrund der aktuellen Gerätenummer ID und des aktuellen Wertes WERT1, WERT2 oder WERT3 des Datenwortes DW die zu dem abgefragten Gerät zugehörige erste Sprachphrase SP1 als Ausgabephrase AP gesetzt.

Beinhaltet das Datenwort DW den zweiten Wert WERT2, so wird aufgrund der aktuellen Gerätenummer ID und des aktuellen Wertes WERT1, WERT2 oder WERT3 des Datenwortes DW die zu dem abgefragten Gerät zugehörige zweite Sprachphrase SP2 als Ausgabephrase AP gesetzt.

Für mindestens einen dritten Wert WERT3, der ungleich dem ersten Wert WERT1 oder dem zweiten Wert WERT2 ist, wird aufgrund der aktuellen Gerätenummer ID und des aktuellen Wertes WERT3 des Datenwortes DW die zu dem abgefragten Gerät zugehörige Sprachphrase SP1 gefolgt von dem dritten Wert WERT3 als Ausgabephrase AP gesetzt.

Nach dem Festlegen der Sprachphrase, wird diese derart aufbereitet, daß sie von einer Einrichtung zur Sprachsynthese übermittelt und ausgegeben werden kann.

Fragt der Benutzer beispielsweise den Zustand der Rolladen ab, so wird für einen übermittelten ersten Wert WERT1 "0" des Datenwortes DW dem Benutzer die Formulierung " Rollade ganz hochgefahren" ausgegeben, für einen übermittelten zweiten Wert WERT2 "255" des Datenwortes DW wird dem Benutzer die Formulierung "Rollade ganz heruntergefahren" ausgegeben und für jeden davon verschiedenen Wert ([1; 254]), z.B. dritter Wert WERT3 "23" wird dem Benutzer die Formulierung " Die aktuelle Stellung der Rollade entspricht dem Wert: 23" ausgegeben.

Nach erfolgter Ausgabe, wird schließlich das Verfahren am Startpunkt 1 fortgesetzt.

Ergibt die Überprüfung, daß kein Gerätezustand eines beliebigen sich in dem lokalen Netz befindenden und mit der Telekommunikationsendeinrichtung verbunden Gerätes von einem Benutzer abgefragt wird, so wird das Verfahren ebenfalls am Startpunkt 1 fortgesetzt.

Die genannten Ausführungsbeispiele stellen nur einen Teil der durch die Erfindung möglichen Ausführungsformen dar. So ist ein auf diesem Gebiet tätiger Fachmann in der Lage, durch vorteilhafte Modifikationen eine Vielzahl von weiteren Ausführungsformen zu schaffen, ohne daß dabei der Charakter (Wesen) der Erfindung verändert wird. Diese Ausführungsformen sollen ebenfalls durch die Erfindung mit erfaßt sein.

## Patentansprüche

1. Verfahren zur Umsetzung einer sprachgebundenen Ausgabe von Zustandsmeldungen von mindestens einem in einem lokalen Netz enthaltenen mit einer Telekommunikationsendeinrichtung verbundenen Gerät mit folgenden Merkmalen:
(a) dem in dem lokalen Netz enthaltenen, mit der Telekommunikationsendeinrichtung verbundenen Gerät wird eine eindeutige Geräteidentifikation zugeordnet wird,
(b) für das in dem lokalen Netz enthaltene, mit der Telekommunikationsendeinrichtung verbundene Gerät, eine erste vorgebbare Sprachphrase (SP1), eine zweite vorgebbare Sprachphrase (SP2) und eine dritte vorgebbare Sprachphrase (SP3) gespeichert wird,
(c) ein Zustand des in dem lokalen Netz enthaltenen mit der Telekommunikationsendeinrichtung verbundenen Gerätes wird der Telekommunikationsendeinrichtung als Datenwort (DW) übermittelt,
(d) den Zuständen des in dem lokalen Netz enthaltenen mit der Telekommunikationsendeinrichtung verbundenen Gerätes, die Sprachphrasen (SP1, SP2, SP3), wenn das Datenwort (DW) übermittelt wird, derart als Ausgabephrase (AP) zugeordnet werden, daß für einen ersten durch einen ersten Wert (WERT1) des Datenwortes (DW) **gekennzeichneten** Zustand die erste Sprachphrase (SP1) als Ausgabephrase (AP) ausgewählt wird, für einen zweiten durch einen zweiten Wert des Datenwortes (WERT2) **gekennzeichneten** Zustand die zweite Sprachphrase (SP2) als Ausgabephrase (AP) ausgewählt wird und für mindestens einen dritten durch einen sich von dem ersten und zweiten Wert (WERT1, WERT2) unter scheidenden Wert (WERT3) des Datenwortes (DW) **gekennzeichneten** Zustand die dritte Sprachphrase (SP3) sowie der zur Sprachausgabe gewandelte, sich von dem ersten und zweiten Wert (WERT1, WERT2) unterscheidende Wert (WERT3) des Datenwortes (DW) als Ausgabephrase (AP) ausgewählt werden,
(e) die Ausgabephrase (AP) zu deren Ausgabe an eine Einrichtung zur Sprachsynthese übertragen wird.

## Claims

1. Method for conversion of a voice output of status messages from at least one appliance which is contained in a local area network and is connected to the telecommunications terminal, having the following features:
(a) a unique appliance identification is allocated to the appliance which is contained in the local area network and is connected to the telecommunications terminal,
(b) a first spoken phrase (SP1) which can be predetermined, a second spoken phrase (SP2) which can be predetermined and a third spoken phrase (SP3) which can be predetermined are stored for the appliance which is contained in the local area network and is connected to the telecommunications terminal,
(c) a status of the appliance which is contained in the local area network and is connected to the telecommunications terminal is transmitted to the telecommunications terminal as a data word (DW),
(d) the spoken phrases (SP1, SP2, SP3) are allocated as an output phrase (AP) to the statuses of the appliance which is contained in the local area network and is connected to the telecommunications terminal when the data word (DW) is transmitted, such that the first spoken phrase (SP1) is selected as the output phrase (AP) for a first status which is identified by a first value (VALUE1) of the data word (DW), the second spoken phrase (SP2) is selected as the output phrase (AP) for a second status which is identified by a second value of the data word (VALUE2), and the third spoken phrase (SP3) as well as that value (VALUE3) of the data word (DW), which is being converted for voice output and differs from the first and second values (VALUE1, VALUE2) are selected as the output phrase (AP) for at least one third status, which is identified by a value (VALUE3) of the data word (DW) which differs from the first and second values (VALUE1, VALUE2),
(e) the output phrase (AP) is transmitted to a device for speech synthesis so that it can be output.

## Revendications

1. Procédé pour convertir une émission de messages d'état donnée sous forme vocale, lesquels proviennent d'au moins un appareil contenu dans un réseau local et connecté à un dispositif terminal de télécommunication, présentant les caractéristiques suivantes:
(a) une identification d'appareil univoque est affectée à l'appareil contenu dans le réseau local et connecté au dispositif terminal de télécommunication;
(b) une première phrase vocale prédéterminable (SP1), une deuxième phrase vocale prédéterminable (SP2) et une troisième phrase vocale prédéterminable (SP3) sont enregistrées pour l'appareil contenu dans le réseau local et connecté au dispositif terminal de télécommunication;
(c) un état de l'appareil contenu dans le réseau local et connecté au dispositif terminal de télécommunication est transmis au dispositif terminal de télécommunication en tant que mot de données (DW);
(d) aux états de l'appareil contenu dans le réseau local et connecté au dispositif terminal de télécommunication sont affectées lors de la transmission du mot de données (DW) les phrases vocales (SP1, SP2, SP3) en tant que phrases d'émissions (AP) de manière telle que, pour un premier état **caractérisé par** une première valeur (VALEUR1) du mot de données (DW), la première phrase vocale (SP1) est sélectionnée en tant que phrase d'émission (AP), pour un deuxième état **caractérisé par** une deuxième valeur du mot de données (VALEUR2), la deuxième phrase vocale (SP2) est sélectionnée en tant que phrase d'émission (AP) et, pour au moins un troisième état **caractérisé par** une valeur (VALEUR3) du mot de données (DW) différente des première et deuxième valeurs (VALEUR1, VALEUR2), la troisième phrase vocale (SP3) ainsi que la valeur (VALEUR3) du mot de données (DW), différente des première et deuxième valeurs (VALEUR1, VALEUR2) et convertie aux fins de l'émission vocale, sont sélectionnées en tant que phrase d'émission (AP);
(e) la phrase d'émission (AP) est transmise pour son émission à un dispositif de synthèse vocale.
